(19)

Europäisches Patentamt
European Patent Office
Office européen des brevets

(11)  **EP 2 815 226 B1**

(12)  **EUROPEAN PATENT SPECIFICATION**

(45) Date of publication and mention
of the grant of the patent:
**02.10.2019   Bulletin 2019/40**

(51) Int Cl.:
***G01N 15/06*** *(2006.01)*

(21) Application number: **13710442.8**

(86) International application number:
**PCT/FI2013/050136**

(22) Date of filing: **08.02.2013**

(87) International publication number:
**WO 2013/121095 (22.08.2013 Gazette 2013/34)**

(54)  **APPARATUS AND PROCESS FOR PRODUCING AIR FLOW AND THE USE OF SUCH APPARATUS IN MEASURING PARTICLE CONCENTRATION IN AIR FLOW**

VORRICHTUNG UND VERFAHREN ZUR HERSTELLUNG EINES  LUFTSTROMS UND VERWENDUNG EINER SOLCHEN VORRICHTUNG BEI DER MESSUNG VON PARTIKELKONZENTRATIONEN IN EINEM  LUFTSTROM

APPAREIL ET PROCÉDÉ DE PRODUCTION D'UN ÉCOULEMENT D'AIR ET UTILISATION DE CET APPAREIL POUR MESURER UNE CONCENTRATION DE PARTICULES DANS L'ÉCOULEMENT D'AIR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **18.02.2012  FI 20125188**

(43) Date of publication of application:
**24.12.2014   Bulletin 2014/52**

(73) Proprietor: **Pegasor OY**
**33100 Tampere (FI)**

(72) Inventor: **JANKA, Kauko**
**FI-33720 Tampere (FI)**

(74) Representative: **Kolster Oy Ab**
**(Salmisaarenaukio 1)**
**P.O. Box 204**
**00181 Helsinki (FI)**

(56) References cited:
**WO-A1-86/02455          WO-A1-2009/109688**
**DE-A1- 10 242 301       GB-A- 1 585 868**
**US-A- 3 526 828          US-A- 4 393 719**
**US-A- 5 220 284          US-A1- 2011 216 317**
**US-A1- 2011 246 089    US-A1- 2011 299 214**

## Description

The present invention relates to an apparatus according to claim 1 for generating an airflow. The present invention also relates to a process according to claim 9 for generating an airflow. The present further relates to the use according to claim 8 of the apparatus for generating an air flow.

## Background of the invention

Within various sensors for measuring air quality there is a need to pass air through the sensor with a known volumetric flow. Such sensors include e.g. particle concentration sensors, humidity sensors and various gas sensors.

Fine particles are formed in many industrial processes and combustion processes. Furthermore, fine particles exist in breathing air flowing in ducts and ventilation systems and in room spaces. For various reasons these fine particles are measured. The fine particle measurements may be conducted because of their potential health effects and also for monitoring operation of industrial processes and combustion processes. The fine particles are also measured in ventilation systems for monitoring air quality. Another reason for monitoring fine particles is the increasing use and production of nanosized particles in industrial processes.

One prior art method and apparatus for measuring fine particles is described in document WO2009109688 A1. In this prior art method clean, essentially particle free, gas is supplied into the apparatus and directed as a main flow via an inlet chamber to an ejector provided inside the apparatus. The clean gas is further ionized before and during supplying it into the inlet chamber. The ionized clean gas may be preferably fed to the ejector at a sonic or close to sonic speed. The ionizing of the clean gas may be carried out for example using a corona charger. The inlet chamber is further provided with a sample inlet arranged in fluid communication with a channel or a space comprising aerosol having fine particles. The clean gas flow and the ejector together cause suction to the sample inlet such that a sample aerosol flow is formed from the duct or the space to the inlet chamber. The sample aerosol flow is thus provided as a side flow to the ejector. The ionized clean gas charges the particles. The charged particles may be further conducted back to the duct or space containing the aerosol. The fine particles of the aerosol sample are thus monitored by monitoring the electrical charge carried by the electrically charged particles. Free ions may further be removed by using an ion trap.

Operation of the particle sensor described in WO2009109688 A1 requires a clean air or gas source. Although in some special cases where the measurement interval is short a gas cylinder or equivalent can be used to provide the clean air, it is in most cases convenient to use some sort of a pump which is able to generate the required volumetric flow and operation pressure. When all the parameters stay essentially constant the construction described in WO2009109688 A1 provides an essentially constant sample flow through the sensor. However, if changes in operational parameters or other conditions may occur, such as changes in particle accumulation in the sensor, the volumetric flow through the sensor should be determined. WO2009109688 A1 is, however, silent on this.

One important demand for the fine particle monitoring apparatuses is reliable operation and efficient operation. Furthermore, it is also preferable that these fine particle monitoring apparatuses may be operated with low energy consumption and continuously for conducting fine particle measurements in real-time.

Whilst there exists conventional ways for generating the flow required for the operation of the sensors, such as fans, pumps or use of compressed gas, such solutions are sometimes not convenient due to e.g. frequently required maintenance. Thus there is a need for flow generation in a way which provides a long-term, reliable airflow.

It is well known to a person skilled in the art that temperature difference in a at least partially essentially vertical air passage will create a chimney effect (also called as stack effect), i.e. air flow through the passage. European patent specification EP 1 155 344 B1, BAE Systems Ltd., 16.4.2003, describes a convective air temperature and humidity sensor. The sensor has an outer member formed with an upwardly directed hole having an open upper end. An inner member in the form of a tube is provided having a lower portion positioned in the hole and an upper portion which projects above the outer member. Solar radiation applied to the upper portion of the tube creates a chimney effect which causes air to flow upwardly inside the tube and downwardly from the open upper end through a space between the inner and outer members. Sensing devices for sensing temperature and humidity are arranged within the outer member and in the air flow path.

Another prior art method and apparatus for measuring fine particles is described in document US5220284A. In this prior art method an airflow is generated in a vertical passage by heating the air. UV radiation is used to ionize the particles in the airflow. The charged particles are caught on an ion filter.

It is obvious from the prior art that in order to create flow through a passage it is not necessary to have the whole passage in vertical direction, i.e. direction aligned with the direction of the force of gravity, but air in the passage may flow to various directions as long as there is an essentially vertical path creating the necessary chimney effect for creating the air flow at some point of the passage.

In some applications, especially in using the chimney effect to create flow for a particle detector using particle charging, it is beneficial to create another flow which is used to prevent the particle charging unit from soiling. Such additional passage includes a filter for removing particles from the air stream passing the charging unit.

The problem with the flow generated by using chimney effect is that the volumetric flow through the passage is sensitive to various parameters and may not stay stable especially if the flow needs to be generated for a long time. Thus there exists a need for improved generation of known (i.e. identified) air flow using the chimney effect.

## Brief description of the invention

The object of the present invention is to provide an apparatus so as to overcome or at least alleviate the prior art disadvantages. The objects of the present invention are achieved with an apparatus according to claim 1 for generating an airflow. The objects of the present invention are also achieved with a process according to claim 9 for generating an airflow. The objects of the present invention are also achieved with a use according to claim 8 of the apparatus for generating an airflow.

The preferred embodiments of the invention are disclosed in the dependent claims.

The inventor has surprisingly found a method which will solve the prior art problems described above, with low-cost flow measurement or monitoring. The low-cost flow measurement or monitoring has been described in detail in applicant's patent application WO2012022843 A1.

The invented process for generating acknowledged flow comprises heating or cooling at least part of a first passage which is directed at least partly in essentially vertical direction, thus generating a temperature difference within the first passage, thereby generating airflow (Q) through the first passage, generating airborne unipolar ions in the passage, measuring the concentration of the airborne electric charge, switching or modulating a parameter which affects the concentration of the airborne electric charge, and determining the volumetric flow (Q) on the basis of the time response which switching or modulation creates to the concentration of the airborne electric charge. Preferably a corona needle is used for generating airborne unipolar ions.

There are only a limited number of switchable parameters which may affect the concentration measurement result of a particle sensor based on unipolar ion generation. Typically the advantageous parameters to switch or modulate are the particle charging efficiency and particle trapping and the actual means to modulate are the corona voltage/current and ion trap voltage,

The acknowledged flow may be divided between first passage and second passage where the second passage is placed inside the first passage. Particles entering the second passage are essentially removed, particle removal being carried out upstream of the discharge electrode. By this way a small, essentially particle-free air flow is passed next to the corona needle and thus the tip of the corona needle is not soiled. The first and second passages are preferably constructed in such a way that the flow through the second passage is less than 10%, preferably less than 5% and more preferably less than 2% of the total flow and thus the use of a second passage with particle removal will not create a considerable measurement error even when the acknowledged flow generating apparatus is used with particle measurement sensors. The flows of the first and second passage are combined in the third passage which also works as a mixing channel for ions and particles when the apparatus for acknowledged flow generation is used in particle measurement sensors based on particle charging, such as described e.g. in described in document WO2009109688 A1.

In one embodiment of the present invention, the invented process comprises electrically charging at least a fraction of particles entering the acknowledged flow generating apparatus, measuring the electrical current carried by charged particles; and switching or modulating the electrical discharge unit at least between first charging stage where the electrical discharge electrode provides a first charge amount to at least a fraction of particles and second charging stage where the electrical discharge electrode provides a second charge amount to at least a fraction of particles.

In the preferred embodiment of the present invention the response from the switched or modulated mode of the electrical discharge unit is determined by synchronic detection. Synchronic detection can be realized by using either analogue electronics or digitally. The digital realization can obviously be carried out in a separate computing unit or it may be integrated to a common controller or computing unit, where other control functions of the electrical impactor are carried out as well.

In another embodiment of the present invention, the invented process comprises electrically charging at least a fraction of the particles entering the acknowledged flow generating apparatus, measuring the electrical current carried by the charged particles, removing ions, charged ultrafine particles or charged fine particles from the aerosol passing through the apparatus and switching or modulating the ion/particle trap at least between OFF-mode where the ion/particle trap essentially removes free ions and ON-mode where ion/particle trap essentially removes particles having a diameter smaller than $d_p$. Free ion or particle removal is dependent on the strength of the electrical field across the ion trap.

The invented process comprises determining the essential parameters of the transfer function of the acknowledged flow generating apparatus and using these essential parameters to calculate the volumetric flow through the apparatus. In one embodiment of the present invention, the invented process comprises providing a computational reference signal, comparing the sensing element output to the reference signal, adjusting the reference signal for maximum correlation between the sensing element output and the reference signal, computing the transfer function of apparatus from the reference signal with maximum correlation and determining the volumetric flow through apparatus using at least some parameters of the computed transfer function. The computational reference signal may follow at least a first-order low-pass filter, in which case determining the delay time $t_d$ and time constant $\mathcal{T}$ of the first-order low-pass filter allows determining the volumetric flow through apparatus using the inverse of $t_d$, $\mathcal{T}$ or the sum thereof,

$$t_d + \mathcal{T}.$$

In the invented process the switching/modulation frequency of a parameter affecting the sensing element output may between 0,01 Hz and 10 Hz, thus providing a fast determination of the acknowledged flow and thus providing accurate basis for sensors where air flow through the sensor is required.

The essential parameters can be determined even continuously when required e.g. due to rapidly changing aerosol composition. If the changes in the measurement environment are not remarkable on a short time interval, and when the maximum time response of the measurement is required, the determination of the essential parameters may be carried out with longer intervals.

**Brief description of the figures**

In the following the invention will be described in greater detail, in connection with preferred embodiments, with reference to the attached drawings, in which

Figure 1 is a schematic view of one embodiment of an apparatus according to the present invention;

Figure 2 is a schematic view of another embodiment of the apparatus where the air passage is not vertical throughout the invented apparatus;

Figure 3 is a schematic view of another embodiment of the apparatus where the sensing device is placed outside the flow generating part of the invented apparatus; and

Figure 4 is a schematic view of another embodiment of an apparatus according to the present invention with more than one passage.

**Detailed description of the invention**

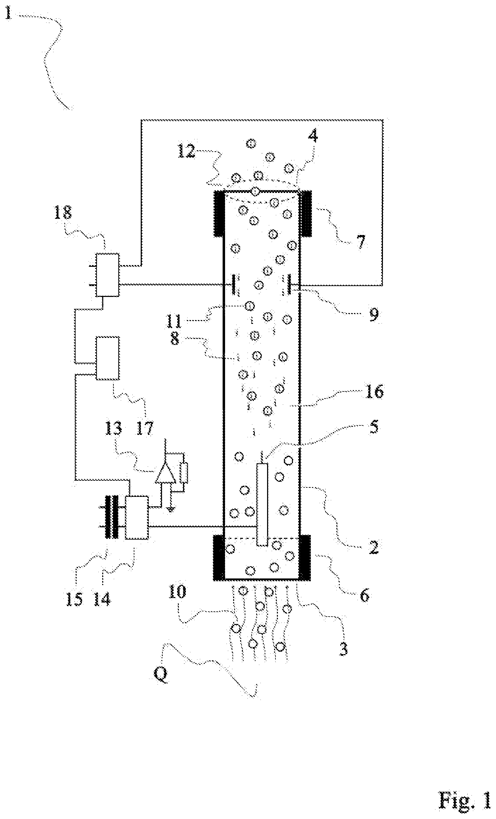

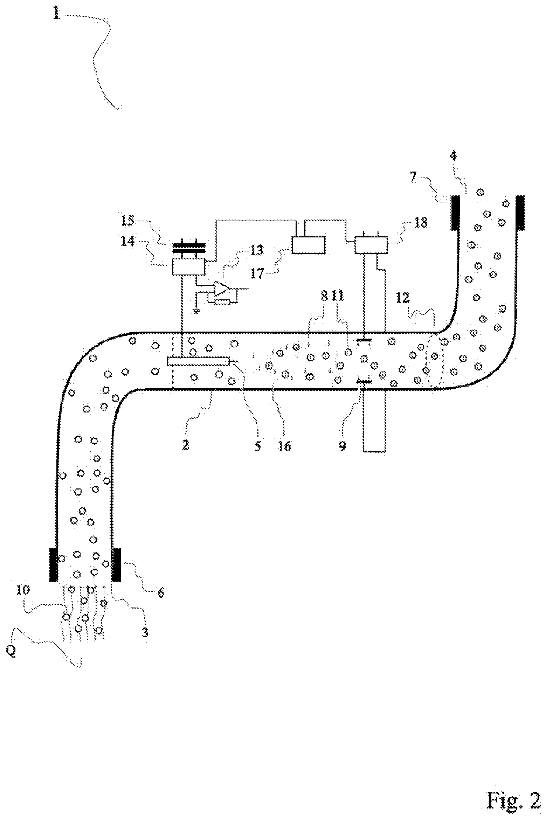

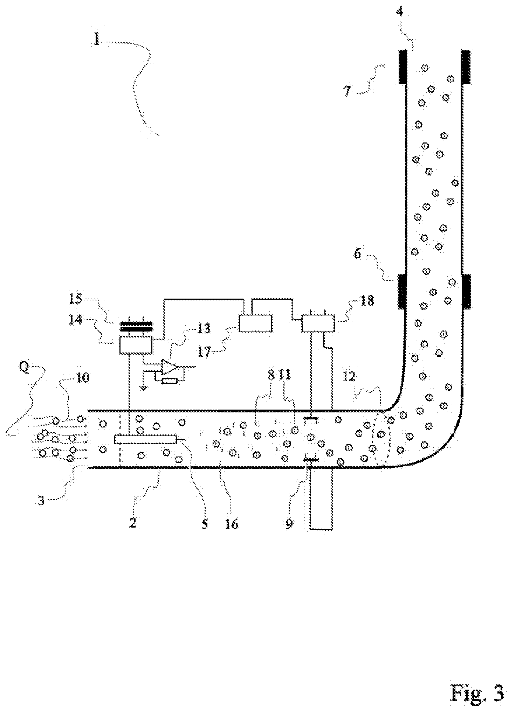

Figure 1 shows the invented apparatus 1 for generating acknowledged flow Q, Figure 2 shows an embodiment where the passage where the flow Q flows is not totally vertical and Figure 3 shows an embodiment where the sensing part required to determine the acknowledged flow is placed upstream the flow generating part of apparatus 1. It is obvious for a person skilled in the art that the sensing part required to determine the acknowledged flow may also be placed downstream the flow generating part of apparatus 1, such embodiment having the benefit that air passing to the sensing part may be heated above the dew point of air flowing through apparatus 1.

Apparatus 1 comprises a first passage 2 which is adapted for air flow through the first passage 2 at least partly in essentially vertical direction, i.e. direction aligned with the direction of the force of gravity. Apparatus 1 further comprises a discharge electrode 5 disposed in the first passage 2 for generating airborne unipolar ions 8 in the passage, means for heating 6 or means for cooling 7, adapted to generate a temperature difference within the first passage 2 ends, thereby generating airflow Q through the first passage 2. Still further apparatus 1 comprises a sensing element 12, 13, the output of which is a function of the concentration of the airborne electric charge, means 17 for switching or modulating a parameter which affects the output of the sensing element 12, 13 and means for determining the volumetric flow Q on the basis of the time response which switching or modulation by means 17 for switching or modulating creates to the sensing element 12, 13 output.

The sensing element may be constructed as measuring the charge entering or passing a sensing element 12, or it may be constructed as an electrometer, which measures the electric current escaping from apparatus 1 as airborne electric charge. This so called "escaping current technique" for measuring particle concentration is described in detail in WO2009109688 A1.

Heater 6 can be constructed in various ways, e.g. by using electrical heating, heating by fluid circulation, solar heating or similar. In one embodiment of the present invention heater 6 is an electrical heater adapted for resistive heating. In another embodiment of the present invention heater 6 is an electrical heater adapted for inductive heating.

In one embodiment of the present invention heating of a part of passage 2 is arranged so that heater 6 also heats at least part of the electrical insulators of apparatus 1 and thus beneficially avoids water condensation on the surfaces of at least part of the electrical insulators of apparatus 1. The heating of insulators can also prevent the deposition of particles on their surfaces. This is due to so-called thermoforetic forces preventing particles to move to the counter direction of the temperature gradient in the gas. The insulator moistening and contaminating would cause electrical leakages, and thus disturbances in operation of the device.

Cooler 7 can be constructed in various ways, e.g. by using cooling by fluid circulation, natural or forced convective cooling, vapour-compression refrigeration or thermoelectric cooling. In one embodiment of the present invention cooler 7 is a thermoelectric cooler, i.e. Peltier cooler.

Apparatus 1 further comprises means 17 for switching or modulating a parameter which affects the output of the sensing element 12, 13 and means (not shown in Fig. 1) for determining the volumetric flow Q on the basis of the time response which switching or modulation creates to the sensing element 12, 13 output. Preferably the volumetric flow Q is determined by providing a computational reference signal, comparing the sensing element 12, 13 output to the reference signal, adjusting the reference signal for maximum correlation between the sensing element 12, 13 output and the reference signal, computing the transfer function of apparatus 1 from the reference signal with maximum correlation and determining the volumetric flow Q through apparatus 1 using at least some parameters of the computed transfer function. In one embodiment of the present invention, the computational reference signal may follow at least a first-order low-pass filter, in which case determining the delay time $t_d$ and time constant $\mathcal{T}$ of the first-order low-pass filter allows determining the volumetric flow Q through apparatus 1 using the inverse of $t_d$, $\mathcal{T}$ or the sum thereof,

$$t_d + \mathcal{T}.$$

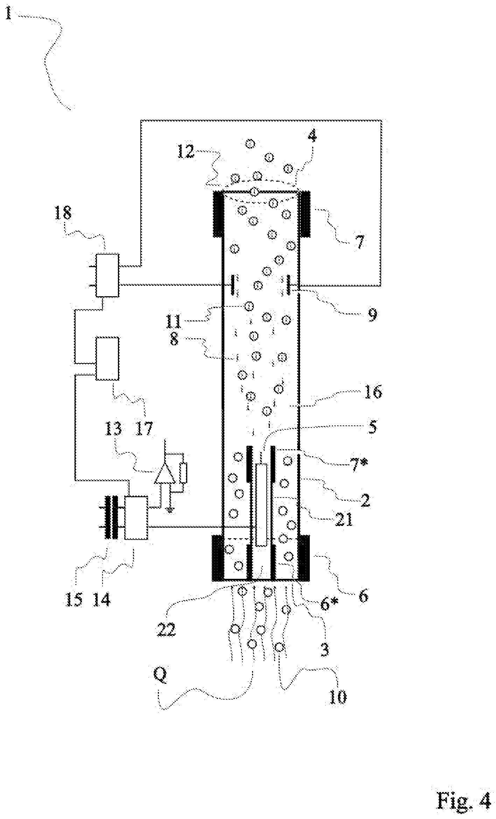

In one embodiment of the present invention, apparatus 1 comprises a corona needle adapted to work as the discharge electrode 5. To avoid corona needle soiling, apparatus 1 comprises in one embodiment of the present invention, shown in Figure 4, a second passage 21 placed inside the first passage 2. The second passage comprises a particle removal unit 22 placed upstream of the discharge electrode 5. Flow through passage 21 may be arranged by the chimney effect in passage 2, adapted to create a flow through passage 21 due to drag force so that a fraction of the air flow Q passes through filter 22 and particles are essentially removed from this flow fraction. Clean air then passes through second passage 21 and from the vicinity of corona needle 5, thus preventing the corona needle from soiling. Flow through passage 21 may also be created by using an additional heater 6* or cooler 7* or both, in which case the chimney effect in passage 21 is constructed to be essentially smaller than the chimney effect in passage 2.

As the fraction of the flow passing through passage 21 is small compared to the flow passing through passage 2, the use of such arrangement does not lead to harmfully erroneous results even when apparatus 1 is used to generate acknowledged flow for a particle measurement sensor.

In one embodiment of the present invention, apparatus 1 comprises a charging chamber 16 placed downstream the discharge electrode 5 for electrically charging at least a fraction of particles 10 entering apparatus 1 with the acknowledged flow Q, an ion/particle trap 9 for removing ions 8 which are not attached to particles 10, means 12, 13 for measuring the electrical current carried by charged particles 11 and means 17 for switching or modulating the electrical discharge unit 5 at least between first charging stage where the electrical discharge electrode 5 provides a first charge amount to at least a fraction of particles 10 and second charging stage where the electrical discharge electrode 5 provides a second charge amount to at least a fraction of particles 10. This embodiment provides the benefit that as the charged particles are more difficult to remove from the air stream Q than the ions (free charges) 8, the response to the modulation of the electrical discharge unit 5 is more accurate. The electrical discharge unit may be switched between ON and OFF stages only, in which case the volumetric flow is easily determined from the response of switching to ON stage only, by knowing the volume between the corona discharge unit 5 and the sensing unit 12, or when the escaping current technique with sensing element 13 is used, the distance between the corona discharge unit 5 and the output end 4 of apparatus 1. In another embodiment the electrical discharge unit 5 is modulated between at least two voltages, each of which provides an air flow through apparatus 1.

In another embodiment of the present invention apparatus 1 comprises a charging chamber 16 placed downstream said discharge electrode 5 for electrically charging at least a fraction of the particles 10 entering apparatus 1, means 12, 13 for measuring the electrical current carried by the charged particles 11, an ion/particle trap 9 for removing ions 8, and/or charged particles 11 having a diameter smaller than $d_p$ and means 17 for switching or modulating the ion/particle trap 9 power source 18 output at least between OFF-mode where the ion/particle trap 9 essentially removes free ions 8 and ON-mode where ion/particle trap 9 essentially removes charged particles 11 having a diameter smaller than $d_p$. The advantage of such embodiment is that the flow Q can be kept essentially constant throughout the flow determination.

In one embodiment of the present invention, apparatus 1 comprises means for determining the essential parameters of the transfer function of apparatus 1. These means may be constructed by analogue or digital means as obvious for a person skilled in the art and the means may be realized within one or several functional blocks.

In one embodiment of the present invention, apparatus 1 comprises means for providing a computational reference signal and the signal is connected to the means for switching or modulating a parameter essentially affecting the sensing element output. Apparatus 1 further comprises means for comparing the sensing element output to the reference signal, means for adjusting the reference signal for maximum correlation between the sensing element output and the reference signal, means for computing the transfer function of apparatus 1 from the reference signal with maximum correlation and means for determining the volumetric flow Q through apparatus 1 using at least some parameters of the computed transfer function. In the preferred embodiment apparatus 1 comprises means for providing a computational reference signal following at least a first-order low-pass filter, means for determining the delay time $t_d$ and time constant $T$ of the first-order low-pass filter and means for determining the volumetric flow through apparatus 1 using the inverse of $t_d$, $T$ or the sum thereof,

$$t_d + T.$$

It is apparent to a person skilled in the art that other dynamic models than the sum of delay and mixed reactor can be used, depending on flow behaviour inside the device.

In one embodiment of the present invention, apparatus 1 comprises means for adjusting the switching/modulation frequency of the means 17 for switching or modulating a parameter which affects the output of the sensing element 12,13, between 0,01 Hz and 10 Hz. Such embodiment offers a fast flow determination.

The present invention also includes use of apparatus 1 as described in the previous embodiments for determining ultrafine particle concentration. Such use of apparatus 1 comprises determining cumulative flow Qt for the period of time t on the basis of the time response which switching or modulation creates to the sensing element output, determining the cumulative particle mass $M_t$ or cumulative number of particles $N_t$ for the period of time t and determining particle mass or number concentration, M or N, by dividing cumulative particle mass $M_t$ or cumulative number of particles $N_t$ by the cumulative flow Qt, i.e. $M = M_t/Q_t$ and $N = N_t/Q_t$.

A significant advantage of the arrangement described above is that the most expensive components; sensing elements and discharge units, are common for both functions; flow monitoring and particle concentration sensing.

It is apparent to a person skilled in the art that as technology advanced, the basic idea of the invention can be implemented in various ways. The invention and its embodiments are therefore not restricted to the above examples, but they may vary within the scope of the claims.

**Claims**

1. Apparatus (1) for generating an airflow (Q), comprising:

   a) a first passage (2) which is adapted for the airflow through the first passage (2) at least partly in essentially vertical direction, which is a direction aligned with the direction of the force of gravity;

   b) a discharge electrode (5) disposed in the first passage (2) for generating airborne unipolar ions (8) in the passage;
   c) means for heating (6) or means for cooling (7), adapted to generate a temperature difference within the first passage (2), thereby generating the airflow (Q) through the first passage (2);
   d) sensing element (12,13), the output of which is a function of the concentration of the airborne electric charge;
   e) means (17) for switching or modulating a parameter which affects the output of the sensing element (12,13);
   f) means for determining the volumetric airflow (Q) on the basis of the time response which switching or modulation by the means (17) for switching or modulating a parameter creates to the sensing element (12,13) output.

2. Apparatus (1) of claim 1, further comprising:

   - an electrical heater (6); and /or

   a Peltier-cooler (7).

3. Apparatus (1) as in claim 1 or 2, further comprising a corona needle adapted to work as the discharge electrode (5).

4. Apparatus (1) of claim 3, further comprising:

   a second passage (21) placed inside the first passage (2); or
   a second passage (21) placed inside the first passage (2) and a heater (6*) and/or cooler (7*) adapted to generate a temperature difference within the second passage (21), thereby generating an airflow through the second passage (21); and/or
   a second passage (21) placed inside the first passage (2) and a particle removal unit (22) in the second passage (21), placed upstream of the discharge electrode (5).

5. Apparatus (1) as in any of the previous claims, further comprising:

   a) a charging chamber (16) placed downstream said discharge electrode (5) for electrically charging at least a fraction of particles (10) entering apparatus (1) with the airflow (Q);
   b) an ion/particle trap (9) for removing ions (8) which are not attached to particles (10):
   c) means (12, 13) for measuring the electrical current carried by charged particles (11); and
   d) means (17) for switching or modulating the electrical discharge unit (5) at least between first charging stage where the electrical discharge electrode provides a first charge amount to at least a fraction of particles (10) and second charging stage where the electrical discharge electrode provides a second charge amount to at least a fraction of particles (10); and/or

comprising:

a) a charging chamber (16) placed downstream said discharge electrode (5) for electrically charging at least a fraction of the particles (10) entering apparatus (1);
b) means (12, 13) for measuring the electrical current carried by the charged particles (11);
c) an ion/particle trap (9) for removing ions (8), and/or charged particles (11) having a diameter smaller than dp; and
d) means (17) for switching or modulating the ion/particle trap (9) power source (18) output at least between OFF-mode where the ion/particle trap(4) essentially removes free ions (8) and ON-mode where ion/particle trap (4) essentially removes charged particles (11) having a diameter smaller than dp.

6. Apparatus (1) as in any of the previous claims, further comprising:

- means for determining an essential parameters of the transfer function of apparatus (1); or
- means for determining an essential parameters of the transfer function of apparatus (1) comprising:

a) means for providing a computational reference signal, connected to the means for switching or modulating a parameter essentially affecting the sensing element output;
b) means for comparing the sensing element output to the reference signal;
c) means for adjusting the reference signal for maximum correlation between the sensing element output and the reference signal;
d) means for computing the transfer function of apparatus (1) from the reference signal with maximum correlation; and
e) means for determining the volumetric airflow (Q) through apparatus (1) using at least some parameters of the computed transfer function.

7. Apparatus (1) as in any of the previous claims, further comprising means for adjusting the switching/modulation frequency of the means (17) for switching or modulating a parameter which affects the output of the sensing element (12,13) between 0,01 Hz and 10 Hz.

8. Use of apparatus (1) as described in the previous claims for determining ultrafine particle concentration, further comprising the steps of:

a) determining a cumulative airflow (Qt) for a period of time (t) on the basis of the time response which switching or modulation creates to the sensing element output;
b) determining a cumulative particle mass (Mt) or a cumulative number of particles (Nt) for the period of time (t); and
c) determining particle mass or number concentration (M or N) by dividing the cumulative particle mass (Mt) or the cumulative number of particles (Nt) by the cumulative airflow (Qt), using the equations M=Mt/Qt and N=Nt/Qt respectively.

9. Process for generating an airflow (Q) in an apparatus (1), comprising the steps of:

a) heating or cooling at least a part of a first passage (2) which is directed at least partly in essentially vertical direction, thus generating a temperature difference within the first passage (2), thereby generating the airflow (Q) through the first passage (2);
b) generating airborne unipolar ions (8) in the first passage (2) with a discharge electrode (5);
c) measuring the concentration of the airborne electric charge;
d) switching or modulating a parameter which affects the concentration of the airborne electric charge; and
e) determining volumetric airflow (Q) on the basis of the time response the which switching or modulation creates to the concentration of the airborne electric charge.

10. Process of claim 9, further comprising the step of using a discharge electrode or a corona needle for generating airborne unipolar ions.

11. Process of claim 9 or 10, further comprising the steps of:

- dividing the airflow (Q) between the first passage (2) and a second passage (21); or
- removing particles entering the second passage, particle removal being carried out upstream of the discharge electrode; and/or
- dividing the airflow (Q) between the first passage (2) and a second passage (21) and combining the flows of the first and second passage (2, 21) in a third passage.

12. Process as in any of claims 9-11, further comprising the steps of:

a) electrically charging at least a fraction of particles entering the apparatus (1) ;

b) measuring the electrical current carried by charged particles; and

c) switching or modulating the electrical discharge unit at least between first charging stage where the electrical discharge electrode provides a first charge amount to at least a fraction of particles and second charging stage where the electrical discharge electrode provides a second charge amount to at least a fraction of particles, and/or

that the process comprises:

a) electrically charging at least a fraction of the particles entering the apparatus

b) measuring the electrical current carried by the charged particles;

c) removing ions, charged ultrafine particles or charged fine particles from the aerosol passing through the apparatus (1); and

d) switching or modulating the ion/particle trap at least between OFF-mode where the ion/particle trap (4) essentially removes free ions and ON-mode where ion/particle trap (4) essentially removes particles having a diameter smaller than dp.

13. Process as in any of claims 9-12, further comprising the steps of:

- determining an essential parameters of a transfer function of the apparatus (1);
- determining the essential parameters of a transfer function of the apparatus (1) comprising:

a) providing a computational reference signal;

b) comparing the sensing element output to the reference signal;

c) adjusting the reference signal for maximum correlation between the sensing element output and the reference signal;

d) computing the transfer function of apparatus (1) from the reference signal with maximum correlation; and

e) determining the volumetric flow through apparatus (1) using at least some parameters of the computed transfer function.

14. Process as in any of claims 9-13, further comprising the step of adjusting the switching/modulation frequency of a parameter affecting the sensing element output, between 0,01 Hz and 10 Hz.

**Patentansprüche**

1. Vorrichtung (1) zur Erzeugung eines Luftstroms (Q), mit:

a) einem ersten Durchgang (2), wobei der erste Durchgang (2) ausgebildet ist für den Durchgang des Luftstroms zumindest teilweise in im Wesentlichen vertikaler Richtung, die eine Richtung ist, die zu der Richtung der Schwerkraft ausgerichtet ist;

b) einer Entladungselektrode (5), die in dem ersten Durchgang (2) zur Erzeugung unipolarer Ionen (8) von Schwebeteilchen in dem Durchgang angeordnet ist;

c) einer Einrichtung zum Heizen (6) oder einer Einrichtung zum Kühlen (7), die ausgebildet ist, eine Temperaturdifferenz in dem ersten Durchgang (2) zu erzeugen, wodurch der Luftstrom (Q) durch den ersten Durchgang (2) erzeugt wird;

d) einem Sensorelement (12, 13), dessen Ausgangssignal eine Funktion der Konzentration der elektrischen Ladung der Schwebeteilchen ist;

e) einer Einrichtung (17) zum Umschalten oder Modulieren eines Parameters, der das Ausgangssignal des Sensorelements (12, 13) beeinflusst;

f) einer Einrichtung zur Ermittlung des volumetrischen Luftstroms (Q) auf der Grundlage der Zeitantwort, die durch ein Umschalten oder ein Modulieren durch die Einrichtung (17) zum Umschalten oder Modulieren eines Parameters an dem Ausgangssignal des Sensorelements (12, 13) erzeugt wird.

2. Vorrichtung (1) nach Anspruch 1, die ferner aufweist:

- eine elektrische Heizung; und/oder

einen Peltier-Kühler (7).

3. Vorrichtung (1) nach Anspruch 1 oder 2, die ferner eine Korona-Spitze aufweist, die ausgebildet ist, als die Entladungselektrode (5) zu fungieren.

4. Vorrichtung (1) nach Anspruch 3, die ferner aufweist:

einen zweiten Durchgang (21), der im Inneren des ersten Durchgangs (2) angeordnet ist; oder einen zweiten Durchgang (21), der im Inneren des ersten Durchgangs (2) angeordnet ist, und eine Heizung (6*) und/oder einen Kühler (7*), die ausgebildet sind, eine Temperaturdifferenz innerhalb des zweiten Durchgangs (21) zu erzeugen, wodurch ein Luftstrom durch den zweiten Durchgang (21) erzeugt wird; und/oder

einen zweiten Durchgang (21), der innerhalb des ersten Durchgangs (2) angeordnet ist, und eine Teilchenentfernungseinheit (22) in dem zweiten Durchgang (21), die stromaufwärts von der Entladungselektrode (5) angeordnet sind.

5.   Vorrichtung (1) nach einem der vorhergehenden Ansprüche, die ferner aufweist:

a) eine Ladekammer (16), die stromabwärts von der Entladungselektrode (5) zum elektrischen Laden mindestens eines Teils von Teilchen (10), die mit dem Luftstrom (Q) in die Vorrichtung (1) eintreten, angeordnet ist;
b) eine Ionen/Teilchenfalle (9) zur Entfernung von Ionen (8), die nicht an Teilchen (10) anhaften;
c) eine Einrichtung (12, 13) zur Messung des elektrischen Stroms, der durch geladene Teilchen (11) hervorgerufen wird; und
d) eine Einrichtung (17) zum Umschalten oder Modulieren der elektrischen Entladungseinheit (5) zumindest zwischen einem ersten Ladezustand, in welchem die elektrische Entladungselektrode eine erste Ladungsmenge für mindestens einen Teil von Teilchen (10) bereitstellt, und einem zweiten Ladungszustand, in welchem die elektrische Entladungselektrode eine zweite Ladungsmenge für mindestens einen Teil von Teilchen (10) bereitstellt; und/oder

mit:

a) einer Ladekammer (16), die stromabwärts von der Entladungselektrode (5) zum elektrischen laden mindestens eines Teils der Teilchen (10), die in die Vorrichtung (1) eintreten, angeordnet ist;
b) einer Einrichtung (12, 13) zur Messung des von dem geladenen Teilchen (11) hervorgerufenen elektrischen Stroms;
c) einer Ionen/Teilchenfalle (9) zum Entfernen von Ionen (8), und/oder von geladenen Teilchen (11) mit einem Durchmesser, der kleiner als dp ist; und
d) einer Einrichtung (17) zum Umschalten oder Modulieren der Ausgangsleistung einer Leistungsquelle (18) der Ionen/Teilchenfalle (9) zumindest zwischen einem AUS-Modus, in welchem die Ionen/Teilchenfalle (4) im Wesentlichen freie Ionen (8) entfernt, und einem EIN-Modus, in welchem die Ionen/Teilchenfalle (4) im Wesentlichen geladene Teilchen (11) mit einem Durchmesser kleiner als dp entfernt.

6.   Vorrichtung (1) nach einem der vorhergehenden Ansprüche, ferner mit:

- einer Einrichtung zur Ermittlung eines wesentlichen Parameters der Transferfunktion der Vorrichtung (1); oder
- einer Einrichtung zur Ermittlung eines wesentlichen Parameters der Transferfunktion der Vorrichtung (1), mit:

a) einer Einrichtung zur Bereitstellung eines Rechenreferenzsignals, wobei die Einrichtung mit der Einrichtung zum Umschalten oder Modulieren eines Parameters, der das Ausgangssignal des Sensorelements wesentlich beeinflusst, verbunden ist;
b) einer Einrichtung zum Vergleichen des Ausgangssignals des Sensorelements mit dem Referenzsignal;
c) einer Einrichtung zum Justieren des Referenzsignals auf maximale Korrelation zwischen dem Ausgangssignal des Sensorelements und dem Referenzsignal;
d) einer Einrichtung zur Berechnung der Transferfunktion der Vorrichtung (1) aus dem Referenzsignal mit der maximalen Korrelation; und
e) einer Einrichtung zur Ermittlung des volumetrischen Luftstroms (Q) durch die Vorrichtung (1) unter Verwendung mindestens eines Parameters der berechneten Transferfunktion.

7.   Vorrichtung (1) nach einem der vorhergehenden Ansprüche, die ferner aufweist:
eine Einrichtung zum Justieren der Umschalt/Modulationsfrequenz der Einrichtung (17) zum Umschalten oder Modulieren eines Parameters, der das Ausgangssignal des Sensorelements (12, 13) beeinflusst, zwischen 0,01 Hz und 10 Hz.

8.   Verwendung einer Vorrichtung (1) nach einem der vorhergehenden Ansprüche zur Ermittlung sehr kleiner Teilchenkonzentrationen, ferner mit den Schritten:

a) Ermitteln eines kumulativen Luftstroms (Qt) für eine Zeitdauer (t) auf der Grundlage der Zeitantwort, die das Umschalten oder Modulieren an dem Ausgangssignal des Sensorelements erzeugt;
b) Ermitteln einer kumulativen Teilchenmasse (Mt) oder einer kumulativen Anzahl an Teilchen (Nt) für die Zeitdauer (t); und
c) Ermitteln einer Konzentration für die Teilchenmasse oder die Anzahl (M oder N) durch Teilen der kumulativen Teilchenmasse (Mt) oder der kumulativen Anzahl an Teilchen (Nt) durch den kumulativen Luftstrom (Qt) unter entsprechender Verwendung der Gleichung M = Mt/Qt und/oder N = Nt/Qt.

9. Prozess zur Erzeugung eines Luftstroms (Q) in einer Vorrichtung (1), mit den Schritten:

   a) Heizen oder Kühlen zumindest eines Teils eines ersten Durchgangs (2), der zumindest teilweise in einer im Wesentlichen vertikalen Richtung ausgerichtet ist, wodurch eine Temperaturdifferenz in dem ersten Durchgang (2) erzeugt wird, und dadurch der Luftstrom (Q) durch den ersten Durchgang (2) hervorgerufen wird;
   b) Erzeugen von unipolaren Ionen (8) aus Schwebeteilchen in dem ersten Durchgang (2) mit einer Entladungselektrode (5);
   c) Messen der Konzentration der elektrischen Ladung der Schwebeteilchen;
   d) Umschalten oder Modulieren eines Parameters, der die Konzentration der elektrischen Ladung der Schwebeteilchen beeinflusst; und
   e) Ermitteln eines volumetrischen Luftstroms (Q) auf der Grundlage der Zeitantwort, die das Umschalten oder das Modulieren an der Konzentration der elektrischen Ladung der Schwebeteilchen erzeugt.

10. Prozess nach Anspruch 9, der ferner den Schritt umfasst:
    Verwenden einer Entladungselektrode oder einer Korona-Spitze zur Erzeugung unipolarer Ionen aus Schwebeteilchen.

11. Prozess nach Anspruch 9 oder 10, der ferner die Schritte umfasst:

    - Aufteilen des Luftstroms (Q) auf den ersten Durchgang (2) und einen zweiten Durchgang (21); oder
    - Entfernen von Teilchen, die in den zweiten Durchgang eintreten, wobei das Entfernen der Teilchen stromaufwärts in Bezug auf die Entladungselektrode erfolgt; und/oder
    - Aufteilen des Luftstroms (Q) auf den ersten Durchgang (2) und einen zweiten Durchgang (21) und Kombinieren der Ströme aus dem ersten und dem zweiten Durchgang (2, 21) in einem dritten Durchgang.

12. Prozess nach einem der Ansprüche 9-11, der ferner die Schritte umfasst:

    a) elektrisches Laden mindestens eines Teils von Teilchen, die in die Vorrichtung (1) eintreten;
    b) Messen des elektrischen Stroms, der durch geladene Teilchen hervorgerufen wird; und
    c) Umschalten oder Modulieren der elektrischen Entladungseinheit zumindest zwischen einem ersten Ladungszustand, in welchem die elektrische Entladungselektrode eine erste Ladungsmenge für mindestens einen Teil von Teilchen bereitstellt, und einem zweiten Ladungszustand, in welchem die elektrische Entladungselektrode eine zweite Ladungsmenge für mindestens einen Teil von Teilchen bereitstellt, und/oder

    wobei der Prozess umfasst:

    a) elektrisches Laden mindestens eines Teils der Teilchen, die in die Vorrichtung eintreten;
    b) Messen des von den geladenen Teilchen hervorgerufenen elektrischen Stroms;
    c) Entfernen von Ionen, geladenen sehr kleinen Teilchen oder geladenen kleinen Teilchen aus den Schwebeteilchen, die die Vorrichtung (1) durchlaufen; und
    d) Umschalten oder Modulieren der Ionen/Teilchenfalle zumindest zwischen einem AUS-Modus, in welchem die Ionen/Teilchenfalle (4) im Wesentlichen freie Ionen entfernt, und einem EIN-Modus, in welchem die Ionen/Teilchenfalle (4) im Wesentlichen Teilchen mit einem Durchmesser kleiner als dp entfernt.

13. Prozess nach einem der Ansprüche 9-12, der ferner die Schritte umfasst:

    - Ermitteln eines wesentlichen Parameters einer Transferfunktion der Vorrichtung (1);
    - wobei Ermitteln des wesentlichen Parameters einer Transferfunktion der Vorrichtung (1) umfasst:

    a) Bereitstellen eines Rechenreferenzsignals;
    b) Vergleichen des Ausgangssignals des Sensorelements mit dem Referenzsignal;
    c) Justieren des Referenzsignals auf eine maximale Korrelation zwischen dem Ausgangssignal des Sensorelements und dem Referenzsignal;
    d) Berechnen der Transferfunktion der Vorrichtung (1) aus dem Referenzsignal mit maximaler Korrelation; und
    e) Ermitteln des volumetrischen Stroms durch die Vorrichtung (1) unter Verwendung mindestens einiger Parameter der berechneten Transferfunktion.

14. Prozess nach einem der Ansprüche 9-13, der ferner den Schritt umfasst: Justieren der Umschalt/Modulationsfrequenz eines Parameters, der das Ausgangssignal des Sensorelements beeinflusst, zwischen 0,01 Hz und 10 Hz.

**Revendications**

1. Appareil (1) pour générer un flux d'air (Q), comprenant :

   a) un premier passage (2) qui est adapté au flux d'air à travers le premier passage (2) au moins partiellement dans une direction essentiellement verticale, qui est une direction alignée avec la direction de la force de gravité ;
   b) une électrode de décharge (5) disposée dans le premier passage (2) pour générer des ions unipolaires aériens (8) dans le passage ;
   c) des moyens de chauffage (6) ou des moyens de refroidissement (7), adaptés pour générer une différence de température à l'intérieur du premier passage (2), générant ainsi le flux d'air (Q) à travers le premier passage (2) ;
   d) un élément de détection (12, 13), dont la sortie est fonction de la concentration de la charge électrique aérienne ;
   e) des moyens (17) pour commuter ou moduler un paramètre qui affecte la sortie de l'élément de détection (12, 13) ;
   f) des moyens pour déterminer le flux d'air volumétrique (Q) sur la base de la réponse temporelle que la commutation ou modulation par les moyens (17) pour commuter ou moduler un paramètre génère sur la sortie de l'élément de détection (12, 13).

2. Appareil (1) selon la revendication 1, comprenant en outre :

   - un appareil de chauffage électrique (6) ; et/ou
   - un refroidisseur Peltier (7).

3. Appareil (1) selon la revendication 1 ou 2, comprenant en outre une aiguille à effet corona adaptée pour fonctionner comme électrode de décharge (5).

4. Appareil (1) selon la revendication 3, comprenant en outre :

   un deuxième passage (21) placé à l'intérieur du premier passage (2) ; ou
   un deuxième passage (21) placé à l'intérieur du premier passage (2) et un dispositif de chauffage (6*) et/ou un refroidisseur (7*) adaptés pour générer une différence de température à l'intérieur du deuxième passage (21), générant ainsi un flux d'air à travers le deuxième passage (21) ; et/ou
   un deuxième passage (21) placé à l'intérieur du premier passage (2) et une unité d'élimination de particules (22) dans le deuxième passage (21), placée en amont de l'électrode de décharge (5).

5. Appareil (1) selon l'une quelconque des revendications précédentes, comprenant en outre :

   a) une chambre de charge (16) placée en aval de ladite électrode de décharge (5) pour charger électriquement au moins une fraction de particules (10) entrant dans l'appareil (1) avec le flux d'air (Q) ;
   b) un piège à ions/particules (9) pour éliminer des ions (8) qui ne sont pas fixés à des particules (10) :
   c) des moyens (12, 13) pour mesurer le courant électrique transporté par des particules chargées (11) ; et
   d) des moyens (17) pour commuter ou moduler l'unité de décharge électrique (5) au moins entre un premier stade de charge où l'électrode de décharge électrique fournit une première quantité de charge à au moins une fraction de particules (10) et un second stade de charge où l'électrode de décharge électrique fournit une seconde quantité de charge à au moins une fraction de particules (10) ; et/ou

   comprenant :

   a) une chambre de charge (16) placée en aval de ladite électrode de décharge (5) pour charger électriquement au moins une fraction des particules (10) entrant dans l'appareil (1) ;
   b) des moyens (12, 13) pour mesurer le courant électrique transporté par les particules chargées (11) ;
   c) un piège à ions/particules (9) pour éliminer des ions (8), et/ou des particules chargées (11) ayant un diamètre inférieur à dp ; et
   d) des moyens (17) pour commuter ou moduler la sortie d'une source d'alimentation (18) du piège à ions/particules (9) au moins entre un mode OFF, où le piège à ions/particules (4) élimine essentiellement des ions libres (8), et un mode ON où le piège à ions/particules (4) élimine essentiellement des particules chargées (11) ayant un diamètre inférieur à dp.

6. Appareil (1) selon l'une quelconque des revendications précédentes, comprenant en outre :

   - des moyens pour déterminer des paramètres essentiels de la fonction de transfert de l'appareil (1) ; ou
   - des moyens pour déterminer des paramètres essentiels de la fonction de transfert de l'appareil (1) comprenant :

   a) des moyens pour fournir un signal de référence de calcul, connectés aux moyens pour commuter ou moduler un paramètre affectant essentiellement la sortie d'élément de détection ;

b) des moyens pour comparer la sortie d'élément de détection au signal de référence ;

c) des moyens pour ajuster le signal de référence pour une corrélation maximale entre la sortie d'élément de détection et le signal de référence ;

d) des moyens pour calculer la fonction de transfert de l'appareil (1) à partir du signal de référence avec une corrélation maximale ; et

e) des moyens pour déterminer le flux d'air volumétrique (Q) à travers l'appareil (1) en utilisant au moins certains paramètres de la fonction de transfert calculée.

7. Appareil (1) selon l'une quelconque des revendications précédentes, comprenant en outre des moyens pour ajuster la fréquence de commutation/modulation des moyens (17) pour commuter ou moduler un paramètre qui affecte la sortie de l'élément de détection (12, 13) entre 0,01 Hz et 10 Hz.

8. Utilisation de l'appareil (1) tel que décrit selon les revendications précédentes pour déterminer une concentration en particules ultrafines, comprenant en outre les étapes consistant à :

a) déterminer un flux d'air cumulatif (Qt) pendant une période de temps (t) sur la base de la réponse temporelle que la commutation ou la modulation génère sur la sortie d'élément de détection ;

b) déterminer une masse de particules cumulative (Mt) ou un nombre cumulatif de particules (Nt) pour la période de temps (t) ; et

c) déterminer une concentration en masse ou en nombre de particules (M ou N) en divisant la masse cumulative de particules (Mt) ou le nombre cumulatif de particules (Nt) par le flux d'air cumulatif (Qt), en utilisant respectivement les équations M=Mt/Qt et N=Nt/Qt.

9. Procédé pour générer un flux d'air (Q) dans un appareil (1), comprenant les étapes consistant à :

a) chauffer ou refroidir au moins une partie d'un premier passage (2) qui est dirigé au moins partiellement dans une direction essentiellement verticale, générant ainsi une différence de température dans le premier passage (2), de manière à générer le flux d'air (Q) à travers le premier passage (2) ;

b) générer des ions unipolaires aériens (8) dans le premier passage (2) à l'aide d'une électrode de décharge (5) ;

c) mesurer la concentration de la charge électrique aérienne ;

d) commuter ou moduler un paramètre qui affecte la concentration de la charge électrique aérienne ; et

e) déterminer un flux d'air volumétrique (Q) sur la base de la réponse temporelle que la commutation ou la modulation génère sur la concentration de la charge électrique aérienne.

10. Procédé selon la revendication 9, comprenant en outre l'étape consistant à utiliser une électrode de décharge ou une aiguille à effet corona pour générer des ions unipolaires aériens.

11. Procédé selon la revendication 9 ou 10, comprenant en outre les étapes consistant à :

- diviser le flux d'air (Q) entre le premier passage (2) et un deuxième passage (21) ; ou
- éliminer des particules entrant dans le deuxième passage, l'élimination de particules étant effectuée en amont de l'électrode de décharge ; et/ou
- diviser le flux d'air (Q) entre le premier passage (2) et un deuxième passage (21) et combiner les flux des premier et deuxième passages (2, 21) dans un troisième passage.

12. Procédé selon l'une quelconque des revendications 9 à 11, comprenant en outre les étapes consistant à :

a) charger électriquement au moins une fraction de particules entrant dans l'appareil (1) ;

b) mesurer le courant électrique transporté par des particules chargées ; et

c) commuter ou moduler l'unité de décharge électrique au moins entre un premier stade de charge où l'électrode de décharge électrique fournit une première quantité de charge à au moins une fraction de particules et un second stade de charge où l'électrode de décharge électrique fournit une seconde quantité de charge à au moins une fraction de particules, et/ou

dans lequel le processus comprend de :

a) charger électriquement au moins une fraction des particules entrant dans l'appareil

b) mesurer le courant électrique transporté par les particules chargées ;

c) éliminer des ions, des particules ultrafines chargées ou des particules fines chargées depuis l'aérosol traversant l'appareil (1) ; et

d) commuter ou moduler le piège à ions/particules au moins entre un mode OFF où le piège à ions/particules (4) élimine essentiellement des ions libres et un mode ON où le piège à ions/particules (4) élimine essentiellement des particules ayant un diamètre inférieur à dp.

**13.** Procédé selon l'une quelconque des revendications 9 à 12, comprenant en outre les étapes consistant à :

- déterminer des paramètres essentiels d'une fonction de transfert de l'appareil (1) ;
- déterminer les paramètres essentiels d'une fonction de transfert de l'appareil (1) comprenant de :

a) fournir un signal de référence de calcul ;
b) comparer la sortie d'élément de détection au signal de référence ;
c) ajuster le signal de référence pour une corrélation maximale entre la sortie d'élément de détection et le signal de référence ;
d) calculer la fonction de transfert de l'appareil (1) à partir du signal de référence avec une corrélation maximale ; et
e) déterminer le flux volumétrique à travers l'appareil (1) en utilisant au moins certains paramètres de la fonction de transfert calculée.

**14.** Procédé selon l'une quelconque des revendications 9 à 13, comprenant en outre l'étape consistant à ajuster la fréquence de commutation/modulation d'un paramètre affectant la sortie d'élément de détection entre 0,01 Hz et 10 Hz.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009109688 A1
- EP 1155344 B1
- US 5220284 A
- WO 2012022843 A1